# EUROPÄISCHE PATENTSCHRIFT

(11) **EP 0 928 255 B1**
(45) Veröffentlichungstag und Bekanntmachung des Hinweises auf die Patenterteilung: **12.04.2000**
(21) Anmeldenummer: 97937444.4
(22) Anmeldetag: 09.08.1997
(51) Int. Cl.: B60K 41/28, F16H 63/46

(54) **AUTOMATISCH GESTEUERTE KUPPLUNG**
AUTOMATIC CLUTCH
SYSTEME D'EMBRAYAGE AUTOMATIQUE

(30) Priorität: 25.09.1996 DE 19639289
(43) Veröffentlichungstag der Anmeldung: 14.07.1999
(73) Patentinhaber: DaimlerChrysler AG, 70567 Stuttgart (DE)
(72) Erfinder: KOSIK, Franz, D-73760 Ostfildern (DE); GRASS, Thomas, D-73660 Urbach (DE)
(74) Vertreter: Patentanwalts-Partnerschaft Rotermund + Pfusch
(86) Internationale Anmeldenummer: DE9701702
(87) Internationale Veröffentlichungsnummer: WO9813225

(56) Entgegenhaltungen:
- GB-A- 2 071 803
- US-A- 4 732 248
- US-A- 5 099 969
- US-A- 5 337 868

## Beschreibung

Die Erfindung betrifft die Steuerung einer automatischen Kupplung im Antriebstrang eines Kraftfahrzeuges mit fahrerseitig gesteuertem Motor und fahrerseitig durch Betätigung einer Handhabe geschaltetem Getriebe, mit einem die Kupplung betätigenden motorischen Stellaggregat und einer zu dessen Steuerung dienenden Sensorik, die vorgegebene Parameter überwacht und ein Signal zur Öffnung der Kupplung erzeugt, wenn Kriterien für eine Schaltabsicht des Fahrers, d.h. für einen vom Fahrer beabsichtigten Wechsel einer Getriebestufe, vorliegen, wobei die Sensorik neben dem Parameter der Bewegung des Schaltorgans auch eine Fahrzeugbremse bzw. deren Betätigungsorgan und einen weiteren fahrerseitig beeinflußbaren bzw. steuerbaren Parameter überwacht und die Kupplung öffnet, wenn die Bewegung des Schaltorgans bzw. Schalthebels und der weitere Parameter eine für eine Schaltabsicht signifikante Parameterkombinaltion bilden.

Bei Kraftfahrzeugen mit üblichen Verbrennungsmotoren muß im Antriebstrang ein Getriebe angeordnet sein, um das Übersetzungsverhältnis zwischen der Drehzahl des Fahrzeugmotors und der Drehzahl der Antriebsräder entsprechend der jeweiligen Fahrgeschwindigkeit und Belastung des Fahrzeuges ändern zu können. Bei üblichen Getrieben muß während des Wechsels einer Fahrstufe der Kraftfluß zwischen Motor und Antriebsrädern durch Öffnen einer Kupplung unterbrochen werden.

Es ist grundsätzlich bekannt, hierzu automatisch gesteuerte Kupplungen einzusetzen, d.h. die Kupplung wird bei Wechsel einer Getriebestufe automatisch geöffnet und nachfolgend wieder geschlossen, vgl. z.B. die DE 35 05 586 A1.

Die US 5 099 969, aus der die eingangs angegebenen Merkmale hervorgehen, steht im Zusammenhang mit dem Problem, daß sich die Drehzahl des Fahrzeugmotors unerwünscht stark erhöhen kann, d.h. der Motor übermäßig ,,hochdreht", wenn die automatische Kupplung bei jeder Betätigung des Schaltorgans bzw. Schalthebels öffnet. Während der Fahrt des Fahrzeuges arbeitet der Fahrzeugmotor oftmals mit höherem Drehmoment, weil zur Überwindung des jeweiligen Fahrwiderstandes das die Motorleistung steuernde Fahrpedal entsprechend stark betätigt ist. Wenn in einer solchen Betriebsphase das Schaltorgan bzw. der Schalthebel unwillentlich betätigt und allein dadurch bewirkt wird, daß die Kupplung öffnet, kann der bisher gegen höhere Last arbeitende Motor aufgrund der bei geöffneter Kupplung verschwindenden Last schnell extreme Drehzahlen erreichen. Deshalb ist nach der US 5 099 969 vorgesehen, daß zur Kupplungssteuerung auch das Drehmoment des Motors bzw. ein damit korrelierter Parameter überwacht werden. Sollte nun bei einer Betätigung des Schaltorgans bzw. Schalthebels ein Motordrehmoment vorliegen, welches einen vorgegebenen Schwellwert überschreitet, wird ein vollständiges Öffnen der Kupplung verhindert. Vielmehr wird lediglich das übertragbare Kupplungsmoment vermindert, so daß der Motor weiterhin gegen eine gewisse Last arbeiten muß. Auf diese Weise wird bei unwillentlicher Betätigung des Schaltorgans bzw. Schalthebels, beispielsweise bei einer Betätigung des Schaltorgans bzw.

Schalthebels durch starke Erschütterungen des Fahrzeuges, ein übermäßiges Hochdrehen des Motors verhindert.

Im übrigen ist nach der US 5 099 969 vorgesehen, die Kupplung auf ein begrenztes übertragbares Moment einzustellen, wenn das Fahrzeug mit der Fahrzeugbremse stehend festgehalten wird und das Getriebe auf eine Fahrstufe geschaltet ist. Damit wird erreicht, daß das Fahrzeug beim Lösen der Fahrzeugbremse sich sofort kriechend in Bewegung zu setzen sucht.

Auch aus der DE 32 00 919 A1 ist es bekannt, die Bewegung des Schaltorgans bzw. des Schalthebels nicht als einziges Kriterium für eine Schaltabsicht des Fahrers heranzuziehen. Hier wird berücksichtigt, daß viele Fahrer des öfteren die Hand auf das Schaltorgan bzw. den Schalthebel legen, ohne das Getriebe schalten zu wollen. In derartigen Fällen soll die automatisch gesteuerte Kupplung nach Möglichkeit geschlossen bleiben. Aus diesem Grunde ist nach DE 32 00 919 A1 vorgesehen, bei der Erkennung der Schaltabsicht zusätzlich das jeweils vom Motor erzeugte Drehmoment oder einen damit korrelierten Parameter, z.B. die Stellung des Fahrpedales oder einer davon betätigten Drosselklappe im Ansaugsystem eines Verbrennungsmotors des Fahrzeuges zu überwachen, wobei nur dann eine Schaltabsicht erkannt und ein Signal zur Öffnung der automatischen Kupplung erzeugt werden, wenn einerseits das Schaltorgan bzw. der Schalthebel bewegt wird und andererseits das Motordrehmoment unter einen vorgegebenen geringen Schwellwert liegt. Dieser Schwellwert ist so bemessen, daß das Fahrpedal praktisch nicht mehr betätigt sein kann.

Aufgabe der Erfindung ist es nun, die Sicherheit bei der Erkennung einer Schaltabsicht zu erhöhen.

Diese Aufgabe wird erfindungsgemäß dadurch gelöst, daß die Kupplung unabhängig von dem zumindest einen weiteren Parameter öffnet, wenn das Schaltorgan und die Fahrzeugbremse simultan betätigt werden.

Die Erfindung beruht auf dem allgemeinen Gedanken, die Erkennung einer Schaltabsicht auch dann zu ermöglichen, wenn Defekte an der Motorsteuerung oder an den zur Überwachung des Drehmomentes oder der Leistung des Motors dienenden Sensoren bzw. Meßgebern auftreten sollten. Wenn beispielsweise das Fahrpedal in betätigter Lage "hängen bleiben" sollte, so können zwar das Drehmoment bzw. die Leistung des Fahrzeugmotors nicht unter einen vorgegebenen Schwellwert absinken. Gleichwohl öffnet sich die Kupplung, wenn die Fahrzeugbremse und die Handhabe betätigt werden. Damit wird der Tatsache Rechnung getragen, daß ein Fahrer bei Störungen der Motorsteuerung, zumindest dann, wenn die Motorleistung unerwünscht hoch bleibt, das Fahrzeug regelmäßig abbremsen und versuchen wird, die jeweils eingelegte Fahrstufe herauszunehmen.

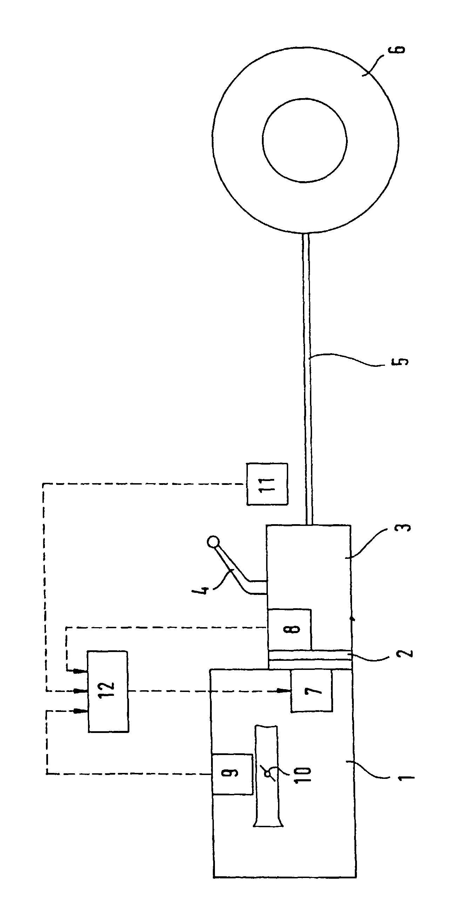

Im übrigen wird hinsichtlich bevorzugter Merkmale der Erfindung auf die Ansprüche sowie die nachfolgende Erläuterung der Zeichnung verwiesen, anhand der eine besonders bevorzugte Ausführungsform beschrieben wird.

Dabei zeigt die einzige Figur eine schematisierte Darstellung eines Antriebstrangs eines Kraftfahrzeuges sowie der für die Kupplungssteuerung wesentlichen Komponenten.

Ein Verbrennungsmotor 1 ist über eine automatisch betätigte Kupplung 2 und ein Getriebe 3, dessen Fahrstufen bzw. Gänge durch manuelle Betätigung eines Schalthebels 4 gewechselt werden, und eine Antriebswelle 5, z.B. eine Kardanwelle, mit Antriebsrädern 6 eines nicht näher dargestellten Kraftfahrzeuges antriebsmäßig verbunden.

Die Betätigung der Kupplung 2 erfolgt automatisch mittels eines motorischen Stellaggregates 7, zu dessen Steuerung eine Sensorik zur Überwachung verschiedener Parameter des Fahrbetriebes vorgesehen ist. Diese Sensorik umfaßt eine Sensoranordnung 8, welche dem Getriebe 3 bzw. dem Schalthebel 4 zugeordnet ist und dessen Stellungen und/oder Bewegungen erfaßt. Des weiteren ist ein Sensor 9 vorgesehen, welcher die Stellung eines zur Leistungssteuerung des Motors 1 dienenden Organs, beispielsweise einer Drosselklappe 10 des Luftansaugsystems des Motors 1, erfaßt. Die Drosselklappe 10 wird in üblicher Weise vom Fahrer durch ein Fahrpedal betätigt, so daß gegebenenfalls auch statt der Stellung der Drosselklappe 10 die Stellung des nicht dargestellten Fahrpedales erfaßt werden kann. Im übrigen kann der Sensor 9 auch andere Parameter erfassen, die mit der Leistung bzw. - insbesondere - mit dem Drehmoment des Motors 1 korreliert sind.

Schließlich umfaßt die Sensorik noch einen Signalgeber 11, der die Betätigung einer nicht näher dargestellten Fahrzeugbremse überwacht. Dieser Signalgeber 11 kann durch einen Bremslichtschalter gebildet werden, welcher bei Betätigung der Fahrzeugbremse zur Einschaltung der Bremslichter zwangsläufig betätigt wird.

Die Signale der Sensoranordnung 8, des Sensors 9 sowie des Signalgebers 11 werden von einer Steuerschaltung 12 des Stellaggregates 7 verarbeitet, wobei ein Signal zur Öffnung der Kupplung 2 erzeugt wird, sobald die Sensoranordnung 8 eine Bewegung des Schalthebels 4 meldet und der Sensor 9 anzeigt, daß die Leistung des Fahrzeugmotors bzw. dessen Drehmoment unter einen geringen Schwellwert abgefallen ist.

Im übrigen wird ein Signal zur Öffnung der Kupplung 2 auch dann erzeugt, wenn - unabhängig von der jeweiligen Leistung bzw. dem jeweiligen Drehmoment des Motors 1 - von der Sensoranordnung 8 eine Bewegung des Schalthebels 4 und dem Signalgeber 11 eine Betätigung der Fahrzeugbremse gemeldet werden.

Die Steuerschaltung 12 wertet im übrigen noch Signale weiterer, nicht dargestellter Sensoren aus, um die Kupplung 2 beim Anfahren bzw. nach dem Wechsel einer Getriebestufe optimal schließen zu können.

## Patentansprüche

1. Steuerung einer automatischen Kupplung (2) im Antriebstrang (1,2,3,5,6) eines Kraftfahrzeuges mit fahrerseitig gesteuertem Motor (1) und fahrerseitig durch Betätigung eines Schaltorgans, insbesondere eines Schalthebels (4), geschaltetem Getriebe (3), mit einem die Kupplung (2) betätigenden Stellaggregat (7) und einer zu dessen Steuerung dienenden Sensorik (8,9,11), die vorgegebene Parameter überwacht und ein Signal zur Öffnung der Kupplung (2) erzeugt, wenn Kriterien für eine Schaltabsicht des Fahrers, d.h. für einen vom Fahrer beabsichtigten Wechsel einer Getriebestufe, vorliegen, wobei die Sensorik (8,9,11,12) neben dem Parameter der Bewegung des Schaltorgans (4) auch eine Fahrzeugbremse bzw. deren Betätigungsorgan und einen weiteren fahrerseitig beeinflußbaren bzw. steuerbaren Parameter überwacht und die Kupplung (2) öffnet, wenn die Bewegung des Schaltorgans und der weitere Parameter eine für eine Schaltabsicht signifikante Parameterkombination bilden,
**dadurch gekennzeichnet,**
daß die Kupplung unabhängig von dem zumindest einen weiteren Parameter öffnet, wenn das Schaltorgan und die Fahrzeugbremse simultan betätigt werden.

2. Kupplung nach Anspruch 1,
**dadurch gekennzeichnet,**
daß eine zur Öffnung der Kupplung (2) führende Schaltabsicht erkannt wird, wenn das Schaltorgan (4) bewegt wird und gleichzeitig ein fahrerseitig betätigbares Leistungssteuerorgan (10) des Motors (1) in bzw. in der Nähe einer Ausgangslage für geringe Motorleistung steht.

3. Kupplung nach Anspruch 1 oder 2,
**dadurch gekennzeichnet,**
daß ein Bremslichtschalter als Signalgeber (11) für die Betätigung der Fahrzeugbremse vorgesehen ist.

## Claims

1. An apparatus for controlling an automatic clutch (2) in the drive train (1, 2, 3, 5, 6) of a motor vehicle, having an engine (1) controlled by the driver and a transmission (3) shifted by the driver by actuating a shifting element, in particular a shift lever (4), having an adjusting unit (7) actuating the clutch (2) and having a system of sensors (8, 9, 11) which serves for controlling said adjusting unit, monitors the predetermined parameters and generates a signal for releasing the clutch (2) if criteria are met for when a shift is intended by the driver, i.e. a change of transmission stage intended by the driver, in which arrangement the system of sensors (8, 9, 11, 12), in addition to the parameter of movement of the shifting element (4), also monitors a vehicle brake or its actuating element and a further parameter which can be influenced or controlled by the driver and releases the clutch (2) if the movement of the shifting element and the further parameter form a combination of parameters significant for intended shifting, wherein the clutch is released independently of the at least one further parameter if the shifting element and the vehicle brake are actuated simultaneously.

2. The clutch as claimed in claim 1, wherein intended shifting leading to release of the clutch (2) is detected if the shifting element (4) is moved and at the same time a power control element (10) of the engine (1) which can be actuated by the driver is in or in the vicinity of an initial position for low engine power.

3. The clutch as claimed in claim 1 or 2, wherein a brake light switch is provided as the signalling device (11) for the actuation of the vehicle brake.

## Revendications

1. Circuit de commande d'un embrayage automatique (2) sur la ligne de transmission (1, 2, 3, 5, 6) d'un véhicule à moteur comportant un moteur (1) commandé par le conducteur et une boîte de vitesses (3) passées par le conducteur par manoeuvre d'un organe de changement de vitesse, en particulier d'un levier de changement de vitesse (4), ainsi qu'un groupe réglant (7) qui manoeuvre l'embrayage (2) et qu'un circuit de détection (8, 9, 11) qui sert à ce circuit de commande, surveille les paramètres prescrits, et produit un signal pour l'ouverture de l'embrayage (2) lorsque se présentent des critères pour un projet de changement de vitesse du conducteur, c'est-à-dire pour un changement de vitesse projeté par le conducteur, dans lequel, en plus du paramètre du mouvement de l'organe de changement de vitesse (4), le circuit de détection (8, 9, 11, 12) surveille également un frein du véhicule et son organe de manoeuvre ainsi qu'un autre paramètre que le conducteur peut influencer ou commander, et ouvre l'embrayage (2) lorsque le mouvement de l'organe de changement de vitesse et l'autre paramètre forment une combinaison de paramètres significative d'un projet de changement de vitesse,
caractérisé par le fait
que l'embrayage s'ouvre, indépendamment de l'autre paramètre, dont il y a au moins un, lorsque l'on manoeuvre simultanément l'organe de changement de vitesse et le frein du véhicule.

2. Embrayage selon la revendication 1,
caractérisé par le fait
qu'un projet de changement de vitesse conduisant à l'ouverture de l'embrayage (2) est reconnu comme tel, lorsque l'on manoeuvre l'organe de changement de vitesse (4) et que simultanément un organe (10) de commande de la puissance du moteur (1), que peut manoeuvrer le conducteur, se trouve en une position demandant une faible puissance du moteur ou près de cette position.

3. Embrayage selon la revendication 1 ou 2,
caractérisé par le fait
qu'un interrupteur de feu stop est prévu comme émetteur de signal (11) pour la manoeuvre du frein du véhicule.
